Europäisches Patentamt

European Patent Office

Office européen des brevets

Publication number: **0 277 425**
**A1**

# EUROPEAN PATENT APPLICATION

21 Application number: **87310962.3**

22 Date of filing: **14.12.87**

51 Int. Cl.⁴: **B60R 13/06**

30 Priority: **16.12.86 GB 8629968**

43 Date of publication of application:
**10.08.88 Bulletin 88/32**

84 Designated Contracting States:
**BE DE ES FR IT NL SE**

71 Applicant: **SILENT CHANNEL PRODUCTS LIMITED**
**Ferrars Road**
**Huntingdon Cambridgeshire PE18 7HN(GB)**

72 Inventor: **Pike, Harold William Edward**
**"Elm Lee" Conington**
**Nr. Elsworth Cambridgeshire(GB)**

74 Representative: **Jones, Michael Raymond et al**
**HASELTINE LAKE & CO. Hazlitt House 28**
**Southampton Buildings Chancery Lane**
**London WC2A 1AT(GB)**

54 Elongate carrier strip.

57 There is disclosed an elongate blank (1) intended to be formed into an elongate core for a strip structure. The blank (1) has a regular series of long slots (2) each extending across at least about 80% of the width of the blank (1) but stopping short of the marginal edges (3) of the blank, and two regular series of short slots (4), the short slots (4) in each series extending inwardly from a respective marginal edge (3) of the blank (1) and each being centered between the axes (5) of the adjacent long slots (2). The elongate blank (1) of the invention is readily bent into the desired configuration and does not require expensive bending operations. An extruded structure (10) having a metal core (13) in accordance with the present invention coated with a flexible resilient material may be supplied to the customer in its flat configuration and bent by the customer using relatively cheap bending equipment rather than the expensive equipment previously used.

FIG.1

# ELONGATE CARRIER STRIP

This invention relates to an elongate carrier strip and is more particularly concerned with an elongate blank intended to be formed into an elongate core for a strip structure. The elongate core thus formed is particularly suitable as the component imparting rigidity to the so-called "S"-shaped sealing strips used to give "semi-flush" automotive glazing systems.

The core presently used in "S"-shaped sealing strips is a preformed rigid metal element which is then encapsulated with rubber. When steel is employed as the metal from which the core is made, expensive equipment is required to bend the conventional metal cores into the desired configuration. This introduces an additional cost element into the manufacture of strip structures which require several bending operations.

According to a first aspect of the present invention, there is provided an elongate blank intended to be formed into an elongate core for a strip structure, the blank having a regular series of long slots each extending across at least about 80% of the width of the blank but stopping short of the marginal edges of the blank, and two regular series of short slots, the short slots in each series extending inwardly from a respective marginal edge of the blank and each being centered between the axes of the adjacent long slots.

The elongate blank of the present invention is readily bent into the desired configuration and does not require expensive "stretch bend" and "contouring equipment". For this reason, the strip structure may be extruded in a flat state and sold to the customer in such a flat condition. The customer may then use relatively cheap bending equipment to bend the extrudate which includes the core of the present invention to the desired configuration. This will simplify packaging and transportation of the component.

Preferably, each long slot stops the same distance short of each marginal edge of the blank; however, it is to be appreciated that, with an asymmetric sealing strip, the long slots may be asymmetrically disposed. Moreover, although not preferred, it is also within the scope of the present invention to provide that the long slots do not all stop the same distance short of the marginal edges of the blank.

In preferred embodiments of the present invention, each long slot extends across at least 90% of the width of the blank. Moreover, it is preferred that there should be little, or no overlap, between each series of short slots and the ends of each long slot. Thus, it is preferred that the short slots extend into the blank by no more than about 10% of the width of the blank, preferably by no more than about 5% of the width of the blank.

Each end of the long slots and the inner end of each short preferably taper to a point. The taper is preferably very short, for example less than 5% of the width of the blank. In one embodiment, the tapering part of each short slot overlaps the tapering part of adjacent long slots.

The material of the blank between the long slots may be viewed as legs. In one embodiment of the present invention each leg of the blank is provided with a short slot extending in the transverse direction of the blank.

Preferably, the elongate blank of the present invention is made from a metal, preferably steel.

The elongate blank of the present invention is conveniently made by a stretching technique in which a metal strip of the desired width is lanced to provide a first series of long slits or cuts extending across the width of the strip, but stopping short of each marginal edge of the strip, and a series of regular short cuts or slits extending inwardly from each marginal edge of the strip and being centered between the axes of adjacent long slits or cuts. The lanced metal strip is then stretched longitudinally.

Alternatively, the elongate blank may be made by cutting the slots out of a elongate metal strip to form the desired configuration.

According to a second aspect of the present invention, there is provided a strip structure including a core made from an elongate blank in accordance with the first aspect of the present invention. The strip structure of the second aspect of the present invention has a flexible resilient material enclosing the core armature, the flexible resilient material preferably being a plastics material or a rubber material.

The strip structure of the present invention is preferably formed by extrusion as a flat element and then bent to the desired configuration. Alternatively, the blank may first be bent into the desired configuration, over which the flexible resilient material is then extruded. Preferably, the strip structure has a "S"-shaped cross-section comprising a first channel and a second channel inversely disposed to the first channel.

For a better understanding of the present invention and to show how the same may be carried into effect, reference will now be made, by way of example, to the accompanying drawings in which:

Figure 1 shows a plan view of a section of an elongate blank in accordance with one embodiment of the present invention;

Figure 2 shows another embodiment of an elongate blank in accordance with the present invention; and

Figure 3 shows a "S"-shaped strip structure incorporating an core armature made from an elongate blank such as that shown in Figure 1.

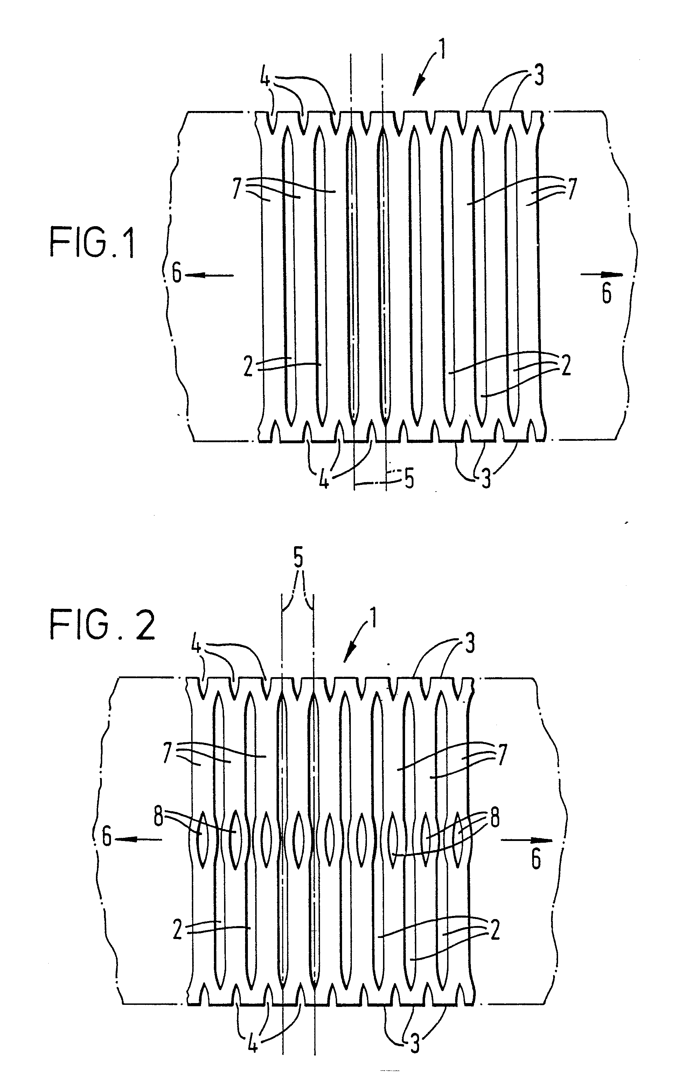

In Figure 1, part of an elongate blank 1 made of a metal has a regular series of long slots 2 which extend across the width of the blank, stopping short of the marginal edges 3 of the blank. Each slot extends across approximately 90% of the width of the blank. The material between the long slots 2 can be viewed as the "legs" 7 of the blank. Along each marginal edge 3 of the blank is provided a regular series of short slots 4 which extend inwardly of each marginal edge and are positioned centrally between the axes 5 of adjacent pairs of long slots. In the embodiment shown, the short slots and the long slots have a very slight overlap and the short slots extend from the marginal edge 3 into the blank by about 5% of the width of the blank.

The elongate blank extends in the direction of the arrows 6 with the same repeating pattern.

In Figure 2, a similar blank to that of Figure 1 is shown. In this embodiment, each leg 7 is provided with a short transverse slot 8 to enhance flexibility.

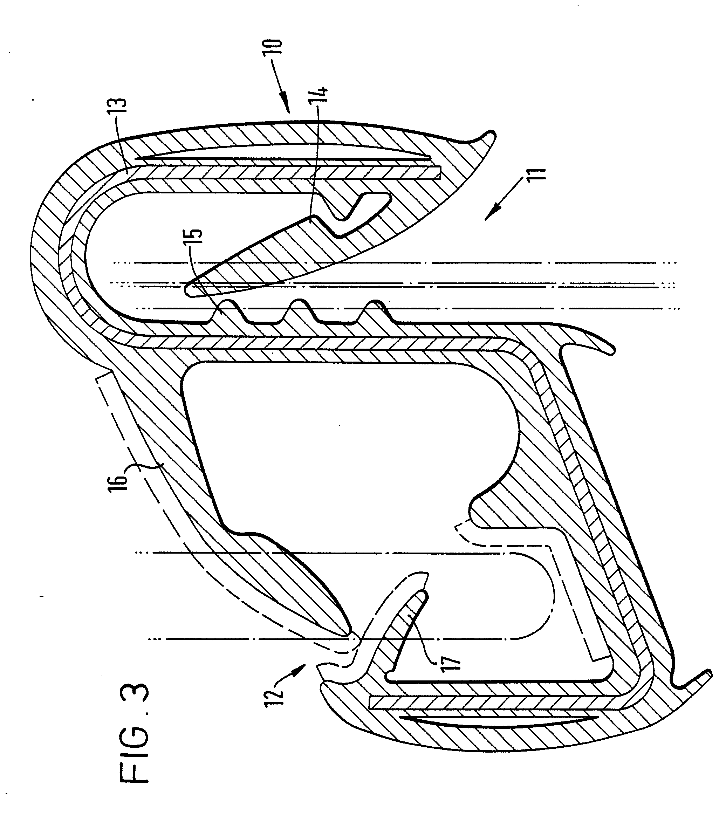

In Figure 3 a "S"-shaped sealing strip 10 is shown. The strip comprises a first U-shaped channel 11 and a second, inversely disposed, glass run channel 12. A metallic core 13 provides rigidity to the strip structure. The metallic armature may be of the type shown in Figure 1 or 2 which is relatively easy to bend without using expensive "stretch bend" and "contouring" equipment. In the first U-shaped channel 11, there is an elongate limb 14 which abuts a flange of a vehicle to secure the strip structure to the vehicle. Short projections 15 extend from the opposite wall of the first U-shaped channel 11 from which the elongate limb 14 extends. The glass-run channel is provided with two limbs 16 and 17 which abut a pane of glass to seal the glass-run channel 12. Surfaces of the glass-run channel which are to abut glass are covered with a. flocking material.

## Claims

1. An elongate blank intended to be formed into an elongate armature for a strip structure, the blank having a regular series of long slots each extending across at least about 80% of the width of the blank but stopping short of the marginal edges of the blank, and two regular series of short slots, the short slots in each series extending inwardly from a respective marginal edge of the blank and being centered between the axes of adjacent pairs of long slots.

2. An elongate blank according to Claim 1, wherein each long slot stops the same distance short of each marginal edge of the blank.

3. An elongate bland according to Claim 1, wherein the long slots are asymmetrically disposed across the width of the blank.

4. An elongate blank according to any one of the preceding claims, wherein each long slot extends across at least 90% of the width of the blank.

5. An elongate blank according to any preceding claim, wherein there is little or no overlap between each series of short slots and the ends of each long slot.

6. An elongate blank according to any preceding claim, wherein each series of short slots extends into the blank by no more than about 10% of the width of the blank.

7. An elongate blank according to Claim 6, wherein each series of short slots extends into the blank by no more than about 5% of the width of the blank.

8. An elongate blank according to any preceding claim, wherein each end of each long slot and the inner end of each short slot taper to a point.

9. An elongate blank according to Claim 8, wherein the length of taper is less than 5% of the width of the blank.

10. An elongate strip according to Claim 8 or 9, wherein the tapering part of each short slot overlaps the tapering part of adjacent long slots.

11. An elongate blank according to any preceding claim, wherein a further series of short slots is provided centrally of the blank, each slot of the further series extending transversely across the blank and being regularly intercalated with the long slots.

12. A method of making an elongate blank comprising providing a metal strip of the desired width, lancing the metal strip to provide a first series of long slits or cuts extending across the width of the strip but stopping short of each marginal edge of the strip, and a series of regular short cuts or slits extending inwardly from each marginal edge of the strip and being centered between the axes of the adjacent long slits or cuts, and longitudinally stretching the lanced metal strip.

13. A flat extruded precursor for a strip structure, the flat extrudate including a core made from an elongate blank in accordance with any one of Claims 1 to 11, said core being coated with a flexible resilient material.

14. A strip structure having a core made from an elongate blank in accordance with any one of Claims 1 to 11, said core being coated with a flexible resilient material.

15. A strip structure according to Claim 14, wherein the strip structure has a configuration which includes a first channel and a second channel which is inversely disposed to the first channel.

87310862·3

FIG.1

FIG.2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | FR-A-1 435 921 (S.A.R.L. J.O.P.) * Page 2, left-hand column, lines 6-48; figures 1-6 * | 1,5,12, 14 | B 60 R 13/06 |
| Y | US-A-2 290 842 (BUSH) * Page 3, left-hand column, line 45 - right-hand column, line 18; figures 7,8 * | 1,5,12, 14 | |
| A | PATENT ABSTRACTS OF JAPAN, vol. 6, no. 157 (M-150)[1035], 18th August 1982; & JP-A-57 74 245 (TOUKAI KOGYO K.K.) 10-05-1982 * Abstract; figures 1,2 * | 1,8,13 | |
| A | GB-A-2 140 065 (MESNEL) * Page 1, lines 11-28; figures 2,3 * | 1,14,15 | |
| P,X | EP-A-0 241 264 (BRIDGESTONE AUSTRALIA) * Column 3, line 29 - column 4, line 9; figures 1,3,4 * | 1,3,14, 15 | TECHNICAL FIELDS SEARCHED (Int. Cl.4) B 60 R |

The present search report has been drawn up for all claims

| Place of search | Date of completion of the search | Examiner |
|---|---|---|
| THE HAGUE | 17-03-1988 | AYITER I. |